# EUROPÄISCHE PATENTSCHRIFT

(11) **EP 2 176 724 B1**
(45) Veröffentlichungstag und Bekanntmachung des Hinweises auf die Patenterteilung: **25.01.2012**
(21) Anmeldenummer: 08775042.8
(22) Anmeldetag: 11.07.2008
(51) Int. Cl.: G05D 23/19, G01M 3/00, G01M 3/40, G01K 1/08, G21C 17/00

(54) **VORRICHTUNG ZUR BESTIMMUNG UND/ODER ÜBERWACHUNG EINER PROZESSGRÖSSE**
APPARATUS FOR DETERMINING AND/OR MONITORING A PROCESS VARIABLE
DISPOSITIF DE DÉTERMINATION ET/OU DE SURVEILLANCE D'UNE GRANDEUR DE PROCESSUS

(30) Priorität: 10.08.2007 DE 102007038060
(43) Veröffentlichungstag der Anmeldung: 21.04.2010
(73) Patentinhaber: Endress+Hauser Wetzer GmbH+CO. KG, 87484 Nesselwang (DE)
(72) Erfinder: PUNIANI, Madhukar, Indianapolis, Indiana 46204 (US)
(74) Vertreter: Andres, Angelika Maria
(86) Internationale Anmeldenummer: PCT/EP2008/059131
(87) Internationale Veröffentlichungsnummer: WO 2009/021794

(56) Entgegenhaltungen:
- US-A- 5 448 603
- US-A1- 2007 234 782
- US-A1- 2008 156 090

## Beschreibung

Die Erfindung bezieht sich auf eine Vorrichtung zur Bestimmung und/oder Überwachung mindestens einer Prozessgröße, mit mindestens einem Gehäuse. Bei der Prozessgröße handelt es sich beispielsweise um die Temperatur, den Füllstand, die Dichte, den Durchfluss, die Viskosität oder den pH-Wert.

Im Stand der Technik sind beispielsweise Temperaturmessgeräte bekannt, bei denen ein Temperatursensor in einem Schutzrohr vor dem direkten Kontakt mit einem Medium oder einem Prozess geschützt ist. Durch die ggf. sehr raue Beanspruchung durch den Prozess kann es dennoch zu Beschädigungen an dem Schutzrohr kommen oder es ist sogar möglich, dass das Schutzrohr ganz abreißt. Durch diese Beeinträchtigung ist zum einen die Messung nicht mehr zuverlässig und zum anderen kann beispielsweise auch Medium aus dem Prozess entweichen. Dies bezieht sich dann nicht nur auf die Schutzeinheit, sondern ggf. auch auf das Gehäuse, in welchem die eigentliche Sensoreinheit und auch Elektronikeinheiten angeordnet sind.
Die Patentschrift US 5,448,603 zeigt einen Feuchtesensor, der zur Überwachung eines Gehäuses hinsichtlich einer Leckage dient, welche Leckage beim Durchbrechen einer Art Berstscheibe eintritt.

Der Erfindung liegt die Aufgabe zugrunde, ein Messgerät vorzuschlagen, bei welchem der Zustand des Gehäuses überwacht wird.

Die Erfindung löst die Aufgabe dadurch, dass mindestens eine Überwachungseinheit vorgesehen ist, welche einen Zustand der Schutzeinheit überwacht, dass die Überwachungseinheit mindestens einen ersten Temperatursensor und einen zweiten Temperatursensor aufweist, dass die Überwachungseinheit mindestens eine Auswerteeinheit aufweist, und dass in der Auswerteeinheit mindestens ein Temperaturprofil hinterlegt ist, wobei das Tempetaturprofil beschreibt, wie sich bei einem Zustand des Gehäuses eine vom ersten Temperatursensor gemessene Temperatur und eine vom zweiten Temperatursensor gemessene Temperatur zueinander verhalten.

Eine Ausgestaltung beinhaltet, dass die Überwachungseinheit derartig ausgestaltet ist, dass die Überwachungseinheit überwacht, ob das Gehäuse gegenüber dem Eindringen eines Mediums im Wesentlichen dicht ist. Die Überwachungseinheit kontrolliert somit, ob das Gehäuse dicht ist gegenüber dem Eindringen eines Mediums, bei welchem es sich beispielsweise um eine Flüssigkeit, ein Gas, allgemein ein Fluid oder um ein Schüttgut handelt. Ist das Gehäuse dicht, so ist es gegenüber dem Medium geschlossen. Das Medium ist dabei beispielsweise das Medium, dessen Prozessgröße zu messen ist; es kann sich jedoch auch um ein anderes Medium handeln, welches Teil des Prozesses ist oder sich dort befindet.

Das erfindungsgemäße Messgerät weist somit mindestens zwei Temperatursensoren auf. Diese beiden Sensoren sind dabei entweder nur Bestandteil der Überwachungseinheit oder ein Sensor dient auch der eigentlichen Messung der Prozessgröße. Dabei handelt es sich beispielsweise um den Durchfluss, welcher thermisch gemessen wird, oder um die Temperatur selbst. Für den Normalfall erlaubt dann diese doppelte Ausführung auch eine redundante Messung bzw. eine Temperaturmessung ist auch dann möglich, wenn ein Temperatursensor ausfällt.

Eine Ausgestaltung sieht vor, dass der erste Temperatursensor und der zweite Temperatursensor derartig innerhalb des Gehäuses angeordnet sind, dass der erste Temperatursensor und der zweite Temperatursensor unterschiedliche Temperaturen messen. Die beiden Temperatursensoren weisen somit einen derartigen Abstand zueinander auf, dass sie bei der herrschenden Prozesstemperatur aufgrund ihrer unterschiedlichen Positionierung unterschiedliche Temperaturen messen. Die gemessenen Temperaturen sollten sich dabei über das Maß der Messunsicherheit hinaus voneinander unterscheiden.

Eine Ausgestaltung beinhaltet, dass mindestens ein Prozessanschluss vorgesehen ist, und dass der erste Temperatursensor und der zweite Temperatursensor innerhalb des Gehäuses an unterschiedlichen Seiten des Prozessanschlusses angeordnet sind. Über einen Prozessanschluss, bei welchem es sich beispielsweise um einen Flansch handelt, wird das Messgerät an seinem Anwendungsort befestigt. Insbesondere wird das Messgerät derartig angebracht, dass das Sensorelement für die eigentliche Messung in Kontakt mit dem zu messenden Medium kommt In dem Fall eines Temperaturmessgerätes mit einem Temperatursensor in einem Schutzrohr wird das Schutzrohr beispielsweise in einen Behälter eingebracht, in welchem sich das zu messende Medium befindet. Der Prozessanschluss definiert somit auch den Übergang zwischen dem Prozess oder speziell dem Innenraum eines Behälters und der Außenwelt um den Prozess bzw. um den Behälter herum. In dieser Ausgestaltung ist somit ein Temperatursensor dem Prozess bxw. dem Medium zugewandt und der andete Sensor ist vom Prozess abgewandt. Ist das Messgerät insbesondere an einem Behälter angebracht, so befindet sich ein Temperatursensor im Behälter und der andere befindet sich außerhalb des Behälters.

Die vom ersten Temperatursensor gemessene Temperatur und die vom zweiten Temperatursensor gemessene Temperatur beziehen sich dabei vorzugsweise auf den gleichen Messzeitpunkt Es handelt sich dabei beispielsweise um eine kompakte oder um eine abgesetzte Ausgestaltung, d.h. die Auswerteeinheit ist direkt mit dem Messgerät verbunden bzw. sogar ein Bestandteil von ihr oder die Auswerteeinheit ist weiter abgesetzt vom eigentlichen Messgetät. Befinden sich die beiden Temperatursensoren an unterschiedlichen Orten, so erfahren sie auch in vielen Fällen andere Temperaturen. Deutlich ist dies, wenn ein Temperatursensor beispielsweise weiter vom Prozess bzw. Medium entfernt ist als der andere Temperatursensor. Der Zustand des Gehäuses, auf welchen sich das Temperaturptofil bezieht, ist dabei im Wesentlichen der korrekte und unbeschadete Zustand des Gehäuses. In der Auswerteeinheit ist somit anhand des Tempetaturprools - z.B. in Form einer Tabelle oder in Form von Formeln - hinterlegt, welche Temperaturen die beiden Temperatursensoren messen, wenn das Gehäuse intakt und dicht ist. Das Temperaturprofil kann beispielsweise auch nur in einem Differenzwert bestehen, welcher ggf. zwischen den beiden jeweils gemessenen Temperaturen vorliegt. Die Auswerteeinheit ist dabei entweder direkt oder indirekt mit den beiden Temperatursensoren verbunden, um deren Messwerte passend in Hinsicht auf das Gehäuse auszuwerten. Beispielsweise handelt es sich jeweils um die elektrischen Signale, aus denen sich die elektrischen Widerstände der Temperatursensoren, insoweit es sich um temperaturabhängige Widerstände handelt, bestimmen lassen. In einer Ausgestaltung nimmt die Auswerteeinheit das Temperaturprofil während einer Lernphase auf. Hierfür ist ggf. ein dritter Sensor erforderlich, der eine Korrelation zwischen den beiden Messwerten bzw. eine Kalibration des Messsystems an sich erlaubt, wenn es sich bei der Prozessgröße um die Temperatur handelt.

Eine Ausgestaltung sieht vor, dass das Temperaturprofil beschreibt, wie sich eine vom ersten Temperatursensor gemessene Temperatur und eine vom zweiten Temperatursensor gemessene Temperatur zueinander verhalten, wenn das Gehäuse gegenüber dem Eindringen eines Mediums im Wesentlichen dicht ist. Das Temperaturprofil ist somit speziell darauf bezogen, dass das Gehäuse dicht und abgeschlossen ist, d.h. für den Normal- oder Regelfall. Stellt die Auswerteeinheit eine Abweichung der gemessenen Temperaturen oder der Differenz der Temperaturen zu dem hinterlegten Soll-Temperaturprofil fest, die einen Toleranzbereich über- oder unterschreitet, so löst die Auswerteeinheit beispielsweise einen Alarm aus. Mit anderen Worten: Eine von einem Sensor gemessene Temperatur geht im Regelfall mit einer speziellen Temperatur einher, welche bei dichtem Gehäuse von dem anderen Sensor zu messen ist. Dies im Rahmen von vorgegebenen Grenzwerten oder zulässigen Abweichungen. Unterscheiden sich die Temperaturen über ein solches Maß hinaus, so liegt dies vermutlich an einer Beschädigung des Gehäuses.

Eine Ausgestaltung sieht vor, dass die Überwachungseinheit zumindest einen Feuchtigkeitssensor aufweist. In dem Gehäuse befindet sich somit zumindest ein Feuchtigkeitssensor, welcher anzeigt, ob Feuchtigkeit als Medium in das Gehäuse eingedrungen ist.

Eine Ausgestaltung beinhaltet, dass die Überwachungseinheit zumindest einen Gassensor aufweist. In dieser Ausgestaltung überwacht die Überwachungseinheit vermittels eines Gassensors, ob Medium bzw. hier speziell Gas in das Gehäuse bzw. in das Schutzrohr eingedrungen ist.

Eine Ausgestaltung sieht vor, dass die Überwachungseinheit zumindest einen Drucksensor aufweist. In dieser Ausgestaltung wird über einen Drucksensor oder speziell über einen entsprechenden Schalter der Druck in dem Gehäuse überwacht. Ändert sich der Druck, so bedeutet dies, dass es nicht mehr dicht ist. Dabei kann beispielsweise bei der Fertigung ein bestimmter Druck in dem Gehäuse erzeugt werden, so dass ein Loch oder ein Bruch des Rohres zu einem Druckabfall oder zu einem Druckanstieg führt.

Eine Ausgestaltung beinhaltet, dass es sich bei der Prozessgröße um die Temperatur handelt. In dieser Ausgestaltung dient ein Temperatursensor der Überwachungseinheit beispielsweise auch der Messung der Prozessgröße.

Eine Ausgestaltung sieht vor, dass es sich bei dem Gehäuse um eine Schutzeinheit für den ersten Temperatursensor handelt. Um die Temperatur eines Mediums oder eines Prozesses zu messen, wird der Temperatursensor vorzugsweise in direkten Kontakt mit dem Medium bzw. dem Prozess gebracht. Als Schutz gegen die mechanische oder chemische Beeinträchtigung ist der Sensor, welcher ggf. im Wesentlichen nur aus einer Widerstandsstruktur besteht, in einer Schutzeinheit untergebracht.

Eine Ausgestaltung beinhaltet, dass die Schutzeinheit im Wesentlichen rohrförmig ausgestaltet ist. Es handelt sich in dieser Ausgestaltung somit um ein Schutzrohr. Die beiden Temperatursensoren sind dabei beispielsweise längs einer Längsachse der Schutzeinheit oberhalb voneinander angeordnet.

Die Erfindung wird anhand der nachfolgenden Zeichnungen näher erläutert. Es zeigt:

Fig. 1: eine schematische Darstellung eines Temperaturmessgerätes, und

Fig. 2: einen Schnitt durch einen Teil eines schematischen Temperaturmessgerätes.

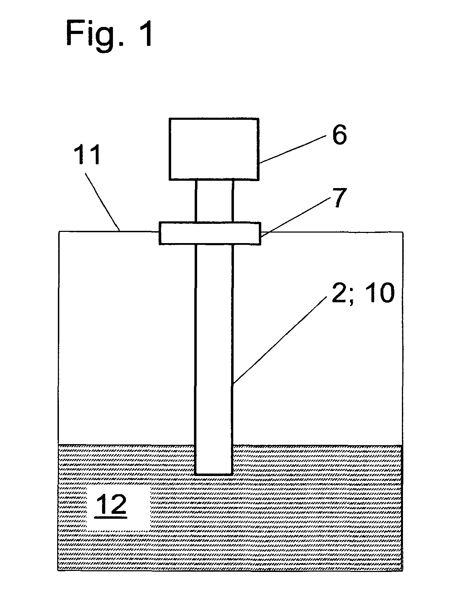

In der Fig. 1 ist ein Messgerät dargestellt, welches als Beispiel der Messung der Temperatur des Mediums 12 in einem Behälter 11 dient. Alternative Prozessgröße können sein: Füllstand, Dichte, Durchfluss, Viskosität oder pH-Wert. Das Messgerät ist dabei über den Prozessanschluss 7, welcher beispielsweise ein Flansch ist, mit dem Behälter 11 verbunden. Das Messgerät besteht dabei im Wesentlichen aus einem Schutzrohr als Schutzeinheit 2 bzw. als zu überwachendem Gehäuse 10 und einer Elektronikeinheit 6 in einem eigenen Gehäuse. Die Elektronikeinheit 6 ist dabei - hier nicht dargestellt - beispielsweise mit einer übergeordneten Leitwarte oder mit einem Feldbussystem verbunden.

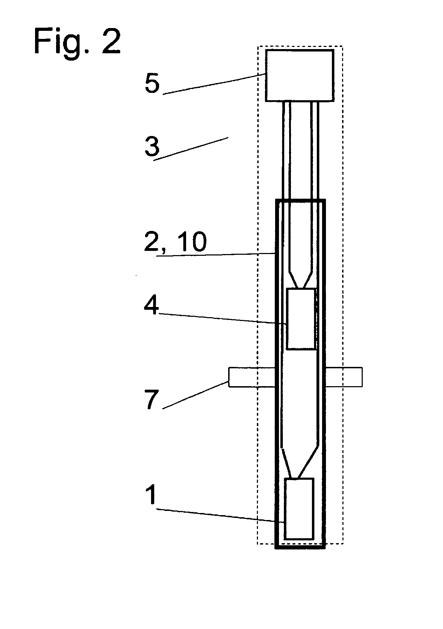

Wie in Fig. 2 dargestellt, befinden sich in dem Schutzrohr 2, welches hier das zu überwachende Gehäuse 10 ist, zwei Temperatursensoren 1, 4. Dabei handelt es sich beispielsweise jeweils um einen (z.B. PT100-)Widerstandstemperatursenor. In einer weiteren Ausgestaltung handelt es sich bei zumindest einem Temperatursensor um ein Thermoelement.

Beide Temperatursensoren 1, 4 befinden sich an unterschiedlichen Orten innerhalb des Schutzrohres 2, so dass beide Sensoren 1, 4 unterschiedliche Temperaturen messen, wobei sie jedoch der gleichen Prozess- oder Mediumstemperatur ausgesetzt sind. Ursächlich daran beteiligt ist ggf. auch noch das Isolations- oder Füllmaterial, welches - hier jedoch nicht dargestellt - ebenfalls in dem Schutzrohr 2 befindlich ist. Die Sensoren 1, 4 befinden sich hier längs der Symmetrieachse der rohrförmigen Schutzeinheit 2 übereinander. Der Abstand der beiden Sensoren 1, 4 ist dabei so bemessen, dass sich eine deutliche bzw. signifikante Temperaturdifferenz bei den jeweiligen Temperaturmessungen einstellt.

Die Unterschiede in den Temperaturen sind als Temperaturprofil, z.B. als Differenzwert, in der Auswerteeinheit 5 hinterlegt, mit welcher auch die beiden Temperatursensoren 1, 4 verbunden sind bzw. zu welcher beide Temperatursensoren 1, 4 ihre Messsignale liefern. Die Auswerteeinheit 5 ist dabei beispielsweise in der Elektronikeinheit 6 angesiedelt.

Das Temperaturprofil ist dabei beispielsweise der Auswerteeinheit 5 bei bekannten Abhängigkeiten fest bei der Fertigung oder im Anschluss daran vorgegeben. Sollte sich die Temperaturdifferenz bzw. das Profil in Abhängigkeit von der herrschenden Temperatur oder den Einbaubedingungen dynamisch verändern, so kann das Profil beispielsweise auch eingelernt werden. Für die Einlernphase ist ggf. auch ein dritter Temperatursensor erforderlich, welcher durch die Messung der Umgebungstemperatur bzw. der Prozesstemperatur eine Kontrollgröße liefert. Der Einlernalgorithmus bezieht sich vorzugsweise auch auf die Dimensionierungen, die Art und Beschaffenheit des Schutzrohres oder die Art des Prozessanschlusses. Die ggf. drei Temperaturdaten geben somit Aufschluss über die Dynamik der Temperaturmessung der zwei Temperatursensoren.

Durch die Anwendung im Prozess, durch Alterungsvorgänge oder durch Beschädigung kann es dazu kommen, dass die Schutzeinheit 2 nicht mehr vollständig isoliert, sondern beispielsweise Schaden nimmt oder beispielsweise abreißt. Um einen solchen Vorgang oder Zustand der Undichtigkeit zu erkennen, wertet die Auswerteeinheit 5 die Messsignale der beiden Temperatursensoren 1, 4 aus und vergleicht sie dabei auch mit dem hinterlegten Temperaturprofil bzw. wertet die Messsignale anhand des Profils aus.

Treten Änderungen der beiden Messsignale auf, bzw. unterscheiden sich die Messsignale der beiden Sensoren 1, 4 stärker als eine vorgebbare Abweichung vom Temperaturprofil, so wird von der Auswerteeinheit 5 ein entsprechendes Signal, z.B. ein Alarm erzeugt. Alternativ kontrolliert die Auswerteeinheit 5 die sich ergebende Differenz zwischen den beiden Temperaturen, die sich aus den Messsignalen ergeben. Durch die redundante Ausgestaltung der Temperatursensoren ergibt sich somit eine Überwachung der Schutzeinheit 2. Tritt das Medium 10 in die Schutzeinheit 2 ein, so kann es je nach Ausgestaltung und Anordnung der Temperatursensoren 1, 4 in direkten Kontakt mit diesen treten, wodurch die Temperaturmesswerte nicht mehr mit dem hinterlegten Temperaturprofil übereinstimmen bzw. von diesem abweichen. Die Differenz zwischen den Temperaturwerten kann durch den Bruch oder allgemein die Beschädigung der Schutzeinheit 2 größer oder kleiner werden. Die Auswerteeinheit 5 erkennt eine solche Abweichung und löst ggf. einen entsprechenden Alarm oder ein entsprechendes Signal aus. In einer weiteren, sicherheitsgerichteten Ausgestaltung wird auch der Prozess an sich heruntergefahren.

Die Überwachungseinheit 3 besteht hier aus der Auswerteeinheit 5, dem ersten Temperatursensor 1 und dem zweiten Temperatursensor 4. Dabei dient der erste Temperatursensor 1 auch der Messung der eigentlichen Prozessgröße, nämlich der Temperatur, d.h. der erste Temperatursensor 1 erfüllt hier zwei Aufgaben. In weiteren Ausgestaltungen dienen die beiden Temperatursensor 1, 4 nur der Überwachung und der eigentlichen Messsensor befindet sich in dem Gehäuse 10 bzw. in der Schutzeinheit 2.

Wie hier zu erkennen, befinden sich die beiden Temperatursensoren 1, 4 auf unterschiedlichen Höhen längs einer Längsachse, bzw. hier längs einer Symmetrieachse des Schutzrohres 2, wobei der erste Temperatursensor 1 sich unterhalb des Prozessanschlusses 7 und somit in Richtung des Prozesses bzw. des Mediums befindet und wobei der zweite Temperatursensor 4 sich auf der anderen Seite des Prozessanschlusses 7 und somit beispielsweise auch außerhalb des Behälters 11 befindet.

Dabei sind die beiden Temperatursensoren in einer Ausgestaltung vom gleichen Typ und in einer weiteren Ausgestaltung diversitär.

In alternativen Ausgestaltungen weist die Überwachungseinheit 3 einen Feuchtigkeits-, einen Gas- oder einen Drucksensor auf. Jeder dieser Sensoren überwacht damit den Innenraum der Schutzeinheit 2 und signalisiert entsprechend das Eindringen eines Mediums, eines Gases oder der Feuchtigkeit bzw. die Änderung des Drucks innerhalb der Schutzeinheit 2.

### Bezugszeichenliste

**Tabelle 1**

| | |
|---|---|
| 1 | Erster Temperatursensor |
| 2 | Schutzeinheit |
| 3 | Überwachungseinheit |
| 4 | Zweiter Temperatursensor |
| 5 | Auswerteinheit |
| 6 | Elektronikeinheit |
| 7 | Prozessanschluss |
| 10 | Gehäuse |
| 11 | Behälter |
| 12 | Medium |

## Patentansprüche

1. Vorrichtung zur Bestimmung und/oder Überwachung mindestens einer Prozessgröße,
mit mindestens einem Gehäuse (10, 2),
wobei mindestens eine Überwachungseinheit (3) vorgesehen ist, welche einen Zustand des Gehäuses (10, 2) überwacht,
**dadurch gekennzeichnet,**
**dass** die Überwachungseinheit (3) mindestens einen ersten Temperatursensor (1) und einen zweiten Temperatursensor (4) aufweist,
**dass** die Überwachungseinheit (3) mindestens eine Auswerteeinheit (5) aufweist, und
**dass** in der Auswerteeinheit (5) mindestens ein Temperaturprofil hinterlegt ist, wobei das Temperaturprofil beschreibt, wie sich bei einem Zustand des Gehäuses (10, 2) eine vom ersten Temperatursensor (1) gemessene Temperatur und eine vom zweiten Temperatursensor (4) gemessene Temperatur zueinander verhalten.

2. Vorrichtung nach Anspruch 1,
**dadurch gekennzeichnet,**
**dass** die Überwachungseinheit (3) derartig ausgestaltet ist, dass die Überwachungseinheit (3) überwacht, ob das Gehäuse (10, 2) gegenüber dem Eindringen eines Mediums (12) im Wesentlichen dicht ist.

3. Vorrichtung nach Anspruch 1,
**dadurch gekennzeichnet,**
**dass** der erste Temperatursensor (1) und der zweite Temperatursensor (4) derartig innerhalb des Gehäuses (10, 2) angeordnet sind, dass der erste Temperatursensor (1) und der zweite Temperatursensor (4) unterschiedliche Temperaturen messen.

4. Vorrichtung nach Anspruch 3,
**dadurch gekennzeichnet,**
**dass** mindestens ein Prozessanschluss (7) vorgesehen ist,
und
**dass** der erste Temperatursensor (1) und der zweite Temperatursensor (4) innerhalb des Gehäuses (10, 2) an unterschiedlichen Seiten des Prozessanschlusses (7) angeordnet sind.

5. Vorrichtung nach Anspruch 1,
**dadurch gekennzeichnet,**
**dass** das Temperaturprofil beschreibt, wie sich eine vom ersten Temperatursensor (1) gemessene Temperatur und eine vom zweiten Temperatursensor (4) gemessene Temperatur zueinander verhalten, wenn das Gehäuse (10, 2) gegenüber dem Eindringen eines Mediums (12) im Wesentlichen dicht ist.

6. Vorrichtung nach einem der Ansprüche 1 bis 5,
**dadurch gekennzeichnet,**
**dass** es sich bei der Prozessgröße um die Temperatur handelt.

7. Vorrichtung nach Anspruch 6,
**dadurch gekennzeichnet,**
**dass** es sich bei dem Gehäuse (10) um eine Schutzeinheit (2) für den ersten Temperatursensor (1) handelt.

8. Vorrichtung nach Anspruch 7,
**dadurch gekennzeichnet,**
**dass** die Schutzeinheit (2) im Wesentlichen rohrförmig ausgestaltet ist.

9. Vorrichtung nach Anspruch 6,
**dadurch gekennzeichnet,**
**dass** einer der Temperatursensoren der Messung der Prozessgröße dient.

10. Vorrichtung nach einem Anspruch 1,
**dadurch gekennzeichnet,**
**dass** sich die beiden Temperatursensoren an unterschiedlichen Orten befinden.

11. Vorrichtung nach Anspruch 5,
**dadurch gekennzeichnet,**
**dass** die Auswerteeinheit eine Abweichung zwischen den gemessenen Temperaturen oder der Differenz der Temperaturen zu dem hinterlegten Temperaturprofil feststellt, und
**dass** die Auswerteeinheit einen Alarm auslöst, wenn die Abweichung einen Toleranzbereich über- oder unterschreitet.

## Claims

1. Unit for determining and/or monitoring at least one process variable,
with at least one housing (10, 2),
wherein at least one monitoring unit (3) is provided which monitors a condition of the housing (10, 2)
**characterized in that**
the monitoring unit (3) has at least one first temperature sensor (1) and a second temperature sensor (4),
the monitoring unit (3) has at least one evaluation unit (5), and
at least one temperature profile is stored in the evaluation unit (5),
wherein the temperature profile describes how a temperature measured by the first temperature sensor (1) and a temperature measured by the second temperature sensor (4) at a given housing state (10, 2) behave vis-à-vis one another.

2. Unit as claimed in Claim 1,
**characterized in that**
the monitoring unit (3) is designed in such a way that the monitoring unit (3) monitors whether the housing (10, 2) is primarily air-tight against the penetration of a medium (12).

3. Unit as claimed in Claim 1,
**characterized in that**
the first temperature sensor (1) and the second temperature sensor (4) are arranged in such a way inside the housing (10, 2) that the first temperature sensor (1) and the second temperature sensor (4) measure temperatures differently.

4. Unit as claimed in Claim 3,
**characterized in that**
at least one process connection (7) is provided
and
the first temperature sensor (1) and the second temperature sensor (4) are arranged inside the housing (10, 2) on different sides of the process connection (7).

5. Unit as claimed in Claim 1,
**characterized in that**
the temperature profile describes how a temperature measured by the first temperature sensor (1) and a temperature measured by the second temperature sensor (4) behave vis-à-vis one another if the housing (10, 2) is primarily air-tight against the penetration of a medium (12).

6. Unit as claimed in one of the Claims 1-5,
**characterized in that**
the process variable is the temperature.

7. Unit as claimed in Claim 6,
**characterized in that**
the housing (10) is a protective unit (2) for the first temperature sensor (1).

8. Unit as claimed in Claim 7,
**characterized in that**
the protective unit (2) is primarily tubular in shape.

9. Unit as claimed in Claim 6,
**characterized in that**
one of the temperature sensors is used to measure the process variable.

10. Unit as claimed in Claim 1,
**characterized in that**
the two temperature sensors are located at different points.

11. Unit as claimed in Claim 5,
**characterized in that**
the evaluation unit determines a deviation between the measured temperatures or the difference between the temperatures and the temperature profile saved, and
the evaluation unit triggers an alarm if said deviation exceeds or falls below a certain tolerance range.

## Revendications

1. Dispositif destiné à la détermination et/ou la surveillance d'au moins une grandeur process,
avec au moins un boîtier (10,2)
pour lequel est prévue au moins une unité de surveillance (3), laquelle surveille un état du boîtier (10,2),
**caractérisé en ce**
**que** l'unité de surveillance (3) comporte au moins un premier capteur de température (1) et un deuxième capteur de température (4),
**que** l'unité de surveillance (3) comporte au moins une unité d'exploitation (5), et qu'est enregistré dans l'unité de surveillance (3) au moins un profil de température, ce dernier décrivant la manière dont une température mesurée par le premier capteur de température (1) se comporte par rapport à une température mesurée par le deuxième capteur de température (4), pour un état donné du boîtier (10,2).

2. Dispositif selon la revendication 1,
**caractérisé en ce**
**que** l'unité de surveillance (3) est conçue de telle manière à ce que l'unité de surveillance (3) surveille si le boîtier (10, 2) est pour l'essentiel étanche par rapport à l'infiltration d'un produit (12).

3. Dispositif selon la revendication 1,
**caractérisé en ce**
**que** le premier capteur de température (1) et le deuxième capteur de température (4) sont disposés à l'intérieur du boîtier (10, 2) de telle manière que le premier capteur de température (1) et le deuxième capteur de température (4) mesurent des températures différentes.

4. Dispositif selon la revendication 3,
**caractérisé en ce**
**qu'**est prévu au moins un raccord process (7)
et
**que** le premier capteur de température (1) et le deuxième capteur de température (4) sont disposés à l'intérieur du boîtier (10, 2) sur des côtés différents du raccord process (7).

5. Dispositif selon la revendication 1,
**caractérisé en ce**
**que** le profil de température décrit la manière dont une température mesurée par le premier capteur de température (1) se comporte par rapport à une température mesurée par le deuxième capteur de température (4), lorsque le boîtier (10, 2) est pour l'essentiel étanche par rapport à l'infiltration d'un produit (12).

6. Dispositif selon l'une des revendications 1 à 5,
**caractérisé en ce**
**que** concernant la grandeur process, il s'agit de la température.

7. Dispositif selon la revendication 6,
**caractérisé en ce**
**que** concernant le boîtier (10), il s'agit d'une unité de protection (2) pour le premier capteur de température (1).

8. Dispositif selon la revendication 7,
**caractérisé en ce**
**que** l'unité de protection (2) est conçu pour l'essentiel de façon tubulaire.

9. Dispositif selon la revendication 6,
**caractérisé en ce**
**que** l'un des capteurs de température sert à la mesure d'une grandeur process.

10. Dispositif selon la revendication 1,
**caractérisé en ce**
**que** les deux capteurs de température se trouvent à différents emplacements.

11. Dispositif selon la revendication 5,
**caractérisé en ce**
**que** l'unité d'exploitation détermine un écart entre les températures mesurées ou la différence des températures par rapport au profil enregistré, et
**que** l'unité d'exploitation déclenche une alarme lorsque l'écart dépasse par le haut ou par le bas une plage de tolérance.
